# EUROPEAN PATENT APPLICATION

(11) **EP 1 710 973 A1**
(43) Date of publication of application: **11.10.2006**
(21) Application number: 05290779.7
(22) Date of filing: 06.04.2005
(51) Int. Cl.: H04L 29/06, H04N 7/14, H04M 1/725

(54) **Specific stream redirection of a multimedia telecommunication**

(71) Applicant: ALCATEL, 75008 Paris (FR)
(72) Inventor: Cournut, Stéphane, 29200 Brest (FR); Rey, Jean-Francois, 29200 Brest (FR)
(74) Representative: Kohler Schmid Möbus

(57) **Abstract**

It is proposed a method for establishing a IP-telecommunications between two participants with a specific control of data stream from that multimedia IP-telecommunications while maintaining the IP-telecommunications between the first and the second participant terminal originally targeted. This is achieved by setting up a connection for the transmission of packets comprising multimedia data from the IP-telecommunications between a terminal from the first participant and a terminal from the second participant both connected to the IP-network while using a sniffer to analyze the header of the data packets from that IP-telecommunications received via the IP-network by the first or second participant. It is provided on that first or second participant terminal of a possibility to initiate a redirection of the analyzed packets corresponding to a specific data stream defined in the header of the respective packets towards a further terminal interconnected with that first or second participant terminal.

## Description

### Technical Field

The present invention relates to a method for establishing a IP-telecommunications between two participants. Furthermore, the present invention is also related to a computer executable software code for the control of data packets received by a participant terminal from a IP-telecommunications between two participants as well as a client computer to be connected to the IP-network and comprising a communication unit for a participant to perform a IP-telecommunications with a second participant.

### Background of the invention

Internet Protocol IP telephony also known as Voice over Internet Protocol (VoIP) is getting more and more popular. Such evolution sustains the base of multimedia telecommunications like videoconferencing based on IP. IP-telecommunications is based on the use of the Internet Protocol to transmit e.g. voice packets over an IP network. Usually, the connection of a call is made by two endpoints opening communications sessions between each other. In the Public Switched Telephone Network (PSTN), the basis network for connection-oriented telecommunications, the public (or private) switch connects logical channels through the network to complete the calls. In a VoIP implementation, this connection is a multimedia stream (audio, video, or both) transported in real time. This connection is the bearer channel and represents the voice and/or video content being delivered.
They are two competing standardized protocols for VoIP operations, ITU-T H.323 and IETF Session Initiation Protocol (SIP). These two protocols describe the signalling and the control of multimedia conferences over packet based networks by different ways.
The ITU recommendation H.323 is a packet-based multimedia communication system that is a set of specifications. These specifications define various signalling functions, as well as media formats related to packetized audio and video services. H.323 standards were generally the first to classify and solve multimedia delivery issues over LAN technologies. The H.323 networks consists of (media) gateways and gatekeepers. Gateways serve as both H.323 termination endpoint and interface with non-H.323 networks, such as the PSTN. Gatekeepers function as a central unit for call admission control, bandwidth management, and call signalling.
In comparison to that, the Session Initiation Protocol (SIP, RFC 3261) is part of IETF's multimedia data and control protocol framework. SIP is a powerful client-server signalling protocol used in VolP networks. SIP handles the setup and tear down of multimedia sessions between speakers; these sessions can include multimedia conferences, telephone calls, and multimedia distribution. It is based on the use of invitations to create Session Description Protocol (SDP) messages to carry out capability exchange and to setup call control channel use. These invitations allow participants to agree on a set of compatible media types. SIP supports use mobility by proxying and redirecting requests to the user's current location. Users can inform the server of their current location (IP address or URL), by sending a registration message to a registrar. The SIP client-server application has two modes of operation: SIP clients can either signal through a proxy or redirect server.
The major components of a VolP network are very similar in functionality to that of a circuit-switched network and are based on three major pieces, namely the media gateways, the media gateway/signalling controllers (gatekeeper) and the IP network itself. The media gateways are responsible for call origination, call detection, analog-to-digital conversion of voice, and creation of voice packets (CODEC functions). In addition, media gateways have optional features, such as voice (analog and/or digital) compression, echo cancellation, silence suppression, and statistics gathering. The media gateway forms the interface that the voice content uses so that it can be transported over the IP network. Media gateways are the sources of bearer traffic. Typically, each conversation (call) is a single IP session transported by a Real-Time Transport Protocol (RTP) that runs over User Datagram Protocol (UDP/IP) or over Transmission Control Protocol (TCP/IP). Media gateway controllers (similar to the H.323 gatekeepers) house the signalling and control services that coordinate the media gateway functions. The media gateway controller has the responsibility for some or all of the call signalling coordination, phone number translations, host lookup, resource management, and signalling gateway services to the PSTN (SS7 gateway).
The Real-Time Transport Protocol (RTP) provides end-to-end delivery services for data with real-time characteristics, such as interactive audio and video. Services include payload type identification, sequence numbering, time stamping, and delivery monitoring. The RTP protocol provides features for real-time applications with the ability to reconstruct timing, loss detection, security, content delivery and identification of encoding schemes. The media gateways that digitize voice use the RTP protocol to deliver the voice (bearer) traffic. For each participant, a particular pair of destination IP addresses defines the session between the two endpoints, which translates into a single RTP session for each phone call in progress. RTP is an application service built on UDP, so it is connectionless with best-effort delivery. As part of its specifications, the RTP Payload Type field includes the encoding scheme that the media gateway uses to digitize the voice content. This field identifies the RTP payload format and determines its interpretation by the CODEC in the media gateway. A profile specifies a default static mapping of payload type codes to payload formats. These mappings represent the ITU-G series of encoding schemes as well as the corresponding for video.
In US 2002/0194606 is described a system and method of communication between videoconferencing systems and computer systems. That system includes a videoconferencing unit and a processor. The videoconferencing unit is a system that captures audio and video information, and creates data in a format appropriate for RTP protocol. The processor receives the data and reassembles it into a format appropriate for standard media on computer systems. More specifically, the step of reassembling the data into a format appropriate for standard media on computer systems can be accomplished through first determining whether a frame of data contains audio or video data, then buffering the audio data or video data, as appropriate. Data is then created in a format appropriate for standard media on computer systems. Once the data is properly formatted and reassembled, it can then be sent as an e-mail attachment or stored on a server. Such a system and method are not appropriate for a specific control of data stream from a IP-telecommunications.

### Summary of the invention

In view of the above, it is an object of the present invention to provide a method for establishing a IP-telecommunications between two participants with a specific control of data stream from that multimedia IP-telecommunications while maintaining the IP-telecommunications between the first and the second participant terminal originally targeted. It is also an object of the present invention to provide a computer executable software code for the control of data packets received by a participant terminal from a IP-telecommunications between two participants. Furthermore, it is an object of the present invention to provide a client computer to be connected through the IP-network and comprising a communication unit for a participant to perform a IP-telecommunications with a second participant, the client computer comprising a computer readable medium having a computer program recorded thereon, the computer program comprising code providing a specific control of data stream from that multimedia IP-telecommunications.
This object is achieved in accordance with the invention by applying the steps of :
- setting up a connection for the transmission of packets comprising multimedia data from the IP-telecommunications between a terminal from the first participant and a terminal from the second participant both connected to the IP-network;
- using a sniffer to analyze the header of the data packets from that IP-telecommunications received via the IP-network by the first or second participant, the sniffer being possibly but not exclusively a unit implemented on that first or second participant terminal;
- providing on that first or second participant terminal of a possibility to initiate a redirection of the analyzed packets corresponding to a specific data stream defined in the header of the respective packets towards a further terminal interconnected with that first or second participant terminal while maintaining the multimedia IP-telecommunications between the first and the second participant terminal usually being first targeted.
In an alternative of the embodiment according to the invention, the specific data to be redirected correspond to the video stream from that multimedia IP-telecommunications. This can be advantageously applied for a multimedia IP-telecommunications being part of a teleconference providing possibilities for sharing documents between the participants.
In another alternative according to the invention, the specific data stream can be redirected towards a dedicated port of that first or second participant terminal. In such a way, the specific data stream redirected to that dedicated port need not to be necessarily preceded by some signalling data since the further terminal to be connected to that dedicated port being already adapted to process that specific data stream. For example, if the specific data stream being video stream part from the multimedia IP-telecommunications, that further terminal connected to the dedicated port would be advantageously a terminal with a display on which will be displayed the pictures corresponding to the video stream.
In accordance with another aspect of the invention, its object is achieved by a computer executable software code for the control of data packets received by a participant terminal from a IP-telecommunications between two participants. That code comprises code providing a possibility on that participant terminal to initiate a redirection of the data packets corresponding to a specific data stream. This is achieved after recognizing the characterization of that specific data stream usually defined in the header of the respective packets. This can be performed by some sniffer being possibly but not necessarily part of that computer executable software code. The use of such computer executable software code advantageously permits to control in a separate way the different specific data stream of the IP-telecommunications. This may be particularly of great advantage when the IP-telecommunications is part of a teleconference so to free e.g. the display of the initially targeted terminal from the video part of the IP-telecommunications by transferring that video towards a further terminal interconnected with that terminal. Such a computer executable software code can be installed on the caller or the callee or even both participants terminals used for the IP-telecommunications.
Advantageous developments of the invention are described in the dependent claims, the following description and the drawings.

### Description of the drawings

An exemplary embodiment of the invention will now be explained further with the reference to the attached drawings in which:
- Fig. 1: is a schematic view of an architecture with the different steps for the setting up of a IP-telecommunications as used for the present invention;
- Fig. 2: is a schematic view of the same architecture as on figure 1 with a different sequence of steps for the setting up of a IP-telecommunications as used for the present invention;
- Fig. 3: is a schematic view of an embodiment according to the present invention;
- Fig. 4: is a flowchart of an embodiment according to the present invention.

### Detailed description of preferred embodiments

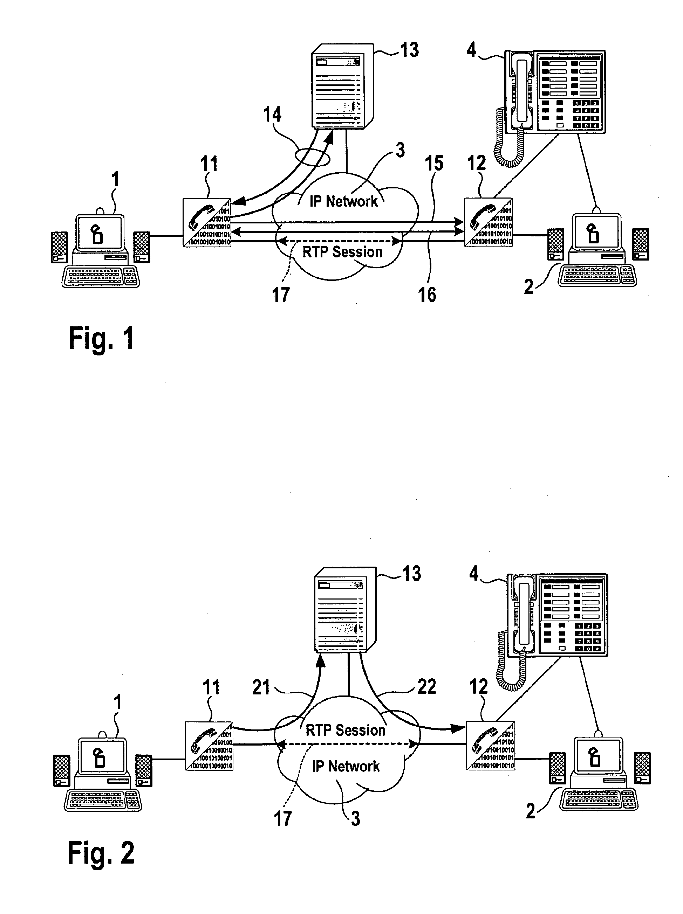

On figure 1 is shown a typical architecture as used when implementing the present invention. The main constituence for performing a IP-telecommunications between two participants i.e. a caller and a callee are the caller and callee terminal respectively 1 and 2 both connected via their respective gateway 11, 12 to the IP-network 3. Usually a further constituent being a gatekeeper (H.323) or a call agent as media gateway controller (SIP) connected to the IP-network 3 is involved when setting up a IP-telecommunications. There exists several ways to set up such IP-telecommunications. If one choose as reference H.323 then the sequence of steps are the following: At boot up or login the terminals 1, 2 of the respectively caller and callee register with the gatekeeper 13 via their respective gateways 1 l, 12. When caller dials the destination phone number of the callee at his terminal 1, that request is sent to the gatekeeper 13 via the gateway 11. Optionally, the gatekeeper 13 authorizes the IP-telecommunications to be completed 14. Gatekeeper 13 keeps truck of bandwidth requirements for that telecommunications. Then, the caller sends call set up message 15 to called callee followed by capability exchange 16 (CODEC parameters, media stream set up) with callee. The callee is informed from his gateway 12 of incoming call by set up message like usual phone ring but also any other kind of message possibly displayed on the screen of the callee terminal 2. Optionally a resource reservation protocol request is directly sent between both gateways 11, 12. And then both participants open a RTP session 17 between themselves.

On figure 2 is shown the same architecture as on figure 1 with a different sequence of steps when setting up a IP-telecommunications corresponding to the use of the alternative standardized protocol SIP. The difference to the figure 1 appears in the sequence of steps when setting up a IP-telecommunications. When caller dials destination phone number of callee on his terminal 1 the media gateway 11 will then notifies 21 the call agent 13 that call is incoming. The call agent 13 looks up phone number (or universal resource locator) and directs gateway 12 to which is connected the callee terminal 2 to create a RTP connection (IP address and port number) between both media gateways 11 and 12. The call agent on 12 informs destination media gateway of income call e.g. from ring or any other message. Finally, both media gateways 11 and 12 open a RTP session 17 between themselves when both participants (caller and callee) open the IP-telecommunications.

When using the standardized protocol SIP, the call agent or media gateway controller 13 can be replaced by a SIP proxy server. Such server after looking up phone number or URL will sent invitation to callee party usually any form of an e-mail address. Alternately, the call agent 13 can be replaced by a SIP redirect server. Such server after looking up phone number or URL to register the callee party will then send a destination address back to caller in a similar way as shown on figure 1 with 14. In the latter case, the caller sends directly invitation to callee using the e-mail address of the callee. Afterwards, the SIP clients i.e. the terminals 1, 2 of the respectively caller and callee open RTP session between themselves when callee user open (pick up) the IP-telecommunications.

According to the present invention, when a IP-telecommunications is setting up between the terminal 1 from the caller and the terminal 2 from the callee, a sniffer can be activated to analyze the header of the received packet via the RTP session by the callee terminal 2 from that caller. The sniffer is able to extract RTP session parameters like RTP ports, caller/responder IP addresses and dynamic codec types from the e.g. SIP session preceding the data flow on RTP. Such sniffer can be implemented on the callee terminal 2 while other implementation are conceivable.

Together with the sniffer is provided to the callee a software code in form of a computer executable software code comprising code providing possibility on the callee terminal to initiate a redirection of the data packets corresponding to a specific data stream. The characterization of that specific data stream is obtained by the sniffer analyzing the header of the respective packets. As shown on figure 1 and 2, a further terminal 4 is connected to the callee terminal 2. Such interconnection can be preferably via a dedicated port like a Universal Serial Bus but other interfaces like a Bluetooth or WLAN are also conceivable. Such further terminal 4 is preferably a IP-terminal like a IP-phone with a display. In such a way, the callee has the possibility to redirect towards that further terminal 4 some specific data stream corresponding e.g. to the video stream from that multimedia IP-telecommunications between the caller terminal 1 and the callee terminal 2. This is particularly advantageous to free the display of the callee terminal 2 from that video stream since being displayed on the screen of that further terminal 4. The use of a dedicated port like a USB port has the advantage not to require specific signalling preceding the specific data stream when redirected towards the further terminal 4 to alert that further terminal 4 of the content of that redirected data stream.

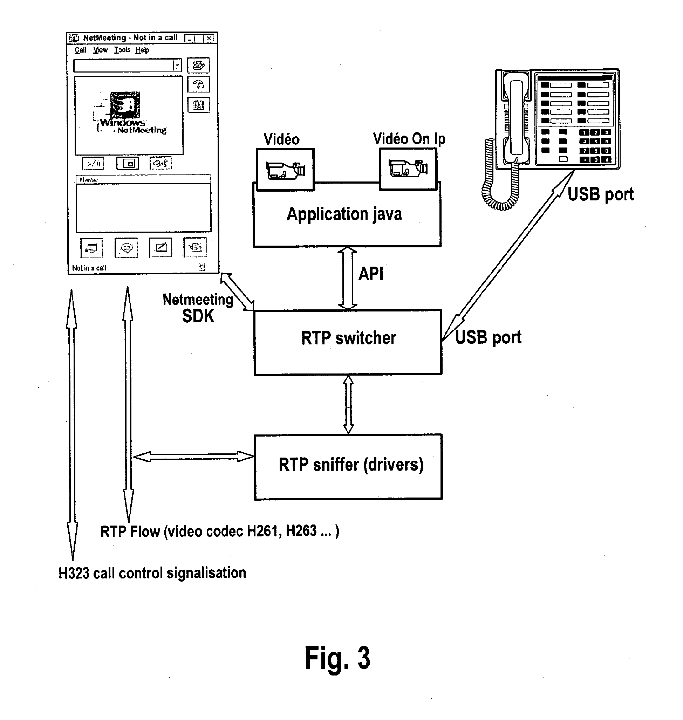

On figure 3 is shown an embodiment according to the invention preferably but not exclusively adapted for IP-telecommunications within teleconference. On that figure is shown H.323 call control signalization as well as the RTP flow (video codec H.261, H.263 and so for) between the caller and the callee terminal. The use of a RTP sniffer (drivers) allows to identify clearly the different packet transferred via RTP between the caller and the callee. Particularly, it is then possible to identify the packets corresponding to the video stream so to be able to differentiate the different stream (audio or video) according to their characterization by the sniffer. Such differentiation can be used by a RTP switcher possibly but not exclusively implemented on the callee terminal 2. On figure 3 is further shown a computer executable software code usually used in a teleconference e.g. allowing the sharing of documents like doc-files or presentations between the participants. Such computer executable software code in form of a Software Development Kit (SDK) here with the example of netmeeting has a direct access to the RTP switcher. On the callee terminal 2 is further implemented some code possibly being part of that computer executable software code comprising code providing the possibility to initiate the redirection. Such code can be in a form of an application Java with some e.g. icons allowing the callee when initiated to redirect the data packets corresponding to a specific data stream defined in the header of the respective packets towards the further terminal 4 here interconnected via USB port. In the example shown on figure 3 the specific data to be redirected correspond to the video stream to be played on the screen of the further terminal being here a IP-terminal with a display. The callee can then use the screen of his terminal 2 to display the document to be shared without necessarily being limited by the video stream of that IP-telecommunications.

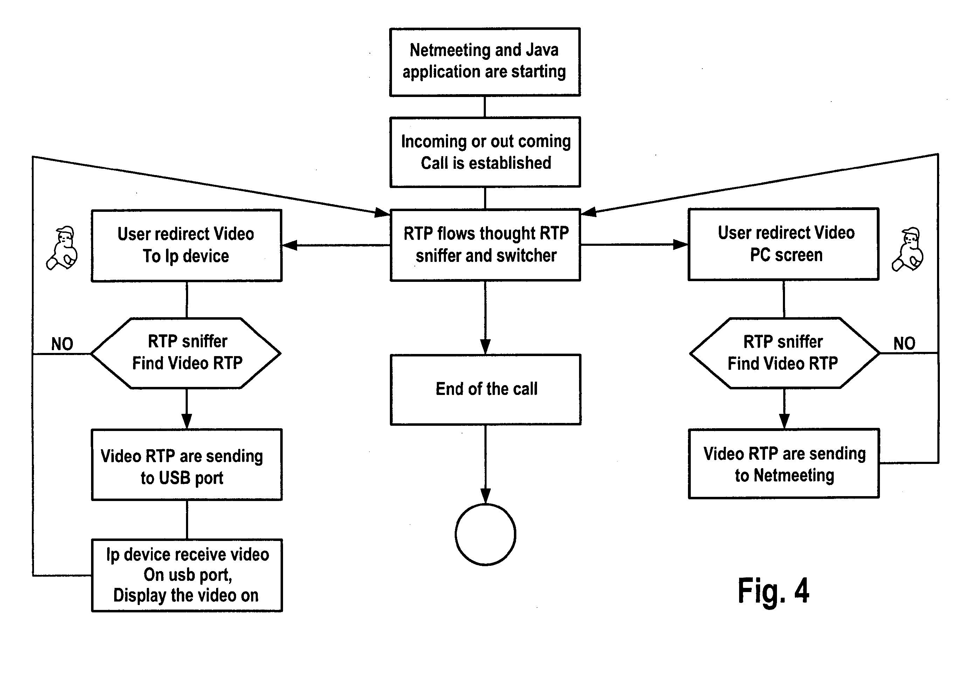

On figure 4 is shown a flow chart of an implementation according to the invention. At first is started the specific development kit to control the sharing of documents during a teleconference together with the Java application allowing to redirect specific data stream. The IP-telecommunications is set up. When the RTP session is established the RTP flows through the RTP sniffer and switcher. The Java application in the embodiment according to figure 4 in a similar fashion as in figure 3 gives the callee (or the caller or even both participants depending the implementation) the option to redirect the video stream towards his terminal being here the PC screen or towards the further IP-device. If the RTP sniffer finds the video stream then it is sent respectively to the SDK (here netmeeting) or to dedicated USB port to be then displayed. If the RTP sniffer is not able to find the video stream e.g. the RTP session is not fully established or using a code not known by that sniffer then the application Java gives the user the possibility to initiate the redirection in a later time.

It is clear from the above description that the proposed solution according to the present invention can be implemented in a similar way at the caller side.

## Claims

1. A method for establishing a IP-telecommunications between two participants, the method comprising the steps of:
• Setting up a connection for the transmission of packets comprising multimedia data from that IP-telecommunications between a terminal from the first participant and a terminal from the second participant both connected to the IP-network;
• Using a sniffer to analyze the header of the data packets from that IP-telecommunications received via the IP-network by the first or second participant terminal;
• Providing on that first or second participant terminal of a possibility to initiate a redirection of the analyzed packets corresponding to a specific data stream defined in the header of the respective packets towards a further terminal interconnected with that first or second participant terminal while maintaining the multimedia IP-telecommunications between the first and the second participant terminal.

2. The method according to claim 1 **characterized by** being adapted for specific data corresponding to the video stream from that multimedia IP-telecommunications.

3. The method according to claim 1 **characterized by** the multimedia IP-telecommunications being part of a teleconference providing possibilities for sharing documents between the participants.

4. The method according to claim 1 **characterized by** redirecting the specific data stream towards a dedicated port of that first or second participant terminal.

5. A computer executable software code for the control of data packets received by a participant terminal from a IP-telecommunications between two participants, the code comprising code providing a possibility on that participant terminal to initiate a redirection of the data packets corresponding to a specific data stream defined in the header of the respective packets towards a further terminal interconnected with that participant terminal while maintaining the multimedia IP-telecommunications between the two participant terminals.

6. The computer executable software code according to claim 5 **characterized that** the code being part of a computer executable software code for performing teleconference via the IP-network providing possibilities for sharing documents between the participants.

7. A client computer to be connected to the IP-network and comprising a communication unit for a participant to perform a IP-telecommunications with a second participant, the client computer comprising a computer readable medium having a computer program recorded thereon, the computer program comprising code providing a possibility to initiate a redirection of the data packets from that IP-telecommunications corresponding to a specific data stream defined in the header of the respective packets towards a further terminal interconnected with that client computer while maintaining the multimedia IP-telecommunications between that communication unit and the second participant terminal.

## Amended claims

### Amended claims in accordance with Rule 86(2) EPC.

**1.** A method for establishing a multimedia IP-telecommunications between two participants, the method comprising the steps of:
• Setting up a connection for the transmission of packets comprising multimedia data from that multimedia IP-telecommunications between a terminal (1) from the first participant and a terminal (2) from the second participant both connected to a IP-network (3);
• Using a sniffer to analyze the header of the data packets from that multimedia IP-telecommunications received via the IP-network (3) by the first or second participant terminal (1, 2);
• Providing on that first or second participant terminal of a possibility to initiate a redirection of the analyzed packets corresponding to a specific data stream defined in the header of the respective packets towards a further terminal (4) interconnected with that first or second participant terminal (1, 2) while maintaining the multimedia IP-telecommunications between the first and the second participant terminal (1, 2).

**2.** The method according to claim 1 **characterized by** being adapted for specific data corresponding to the video stream from that multimedia IP-telecommunications.

**3.** The method according to claim 1 **characterized by** the multimedia IP-telecommunications being part of a teleconference providing possibilities for sharing documents between the participants.

**4.** The method according to claim 1 **characterized by** redirecting the specific data stream towards a dedicated port of that first or second participant terminal (1, 2).

**5.** A computer executable software code for the control of data packets received by a participant terminal (1, 2) from a multimedia IP-telecommunications between two participants, the code comprising code providing a possibility on that participant terminal (1, 2) to initiate a redirection of the data packets corresponding to a specific data stream defined in the header of the respective packets towards a further terminal (4) interconnected with that participant terminal (1, 2) while maintaining the multimedia IP-telecommunications between the two participant terminals (1, 2).

**6.** The computer executable software code according to claim 5 **characterized** that the code being part of a computer executable software code for performing teleconference via a IP-network (3) providing possibilities for sharing documents between the participants.

**7.** A client computer to be connected to a IP-network (3) and comprising a communication unit for a participant to perform a multimedia IP-telecommunications with a second participant, the client computer comprising a computer readable medium having a computer program recorded thereon, the computer program comprising code providing a possibility to initiate a redirection of the data packets from that multimedia IP-telecommunications corresponding to a specific data stream defined in the header of the respective packets towards a further terminal (4) interconnected with that client computer while maintaining the multimedia IP-telecommunications between that communication unit and the second participant terminal.

**8.** The client computer according to claim 7 **characterized by** the the multimedia IP-telecommunications being a teleconference and the code being part of the computer program providing possibilities for sharing documents between the participants.
